# EUROPÄISCHE PATENTSCHRIFT

(11) **EP 2 702 846 B1**
(45) Veröffentlichungstag und Bekanntmachung des Hinweises auf die Patenterteilung: **14.11.2018**
(21) Anmeldenummer: 13170656.6
(22) Anmeldetag: 05.06.2013
(51) Int. Cl.: A01B 69/00, G08C 17/02, A01B 79/00

(54) **Telemetrievorrichtung**
Telemetry device
Dispositif de télémétrie

(30) Priorität: 04.09.2012 DE 102012017451
(43) Veröffentlichungstag der Anmeldung: 05.03.2014
(73) Patentinhaber: CLAAS E-Systems KGaA mbH & Co KG, 49201 Dissen a.T.W. (DE)
(72) Erfinder: Kluge, André, 33813 Oerlinghausen (DE); Kruszona, Fabian, 33609 Bielefeld (DE)
(74) Vertreter: Budach, Steffen

(56) Entgegenhaltungen:
- EP-A1- 1 741 329
- DE-A1- 19 514 223
- US-A1- 2009 192 654

## Beschreibung

Die Erfindung betrifft einen Landwirtschaftlichen Arbeitszug mit den Merkmalen des Oberbegriffs von Anspruch 1, ein Verfahren zur Zustandsakquisition mit den Merkmalen des Oberbegriffs von Anspruch 12.

In der modernen Landwirtschaft kommt es zunehmend auf die hocheffiziente Nutzung der Produktionsressourcen an. Das betrifft einerseits den landwirtschaftlichen Boden selbst, bei dem etwa die Anbau-, Dünge- und Erntevorgänge genau auf die Gegebenheiten und die Historie des jeweiligen Flächenteils anzupassen sind, andererseits die landwirtschaftlichen Maschinen, welche sowohl in kurzer Zeit und ohne Leerlauf eine Agrarfläche bearbeiten sollen als auch so eingesetzt werden sollen, dass unnötige Wartungen vermieden werden. Schließlich soll auch im betriebswirtschaftlichen Bereich eine maximale Ertrags-, Wirtschaftlichkeits- und Kostentransparenz erreicht werden.

Diese Ziele können insbesondere durch eine möglichst umfassende und lückenlose Datenerfassung bei den landwirtschaftlichen Arbeitsprozessen und eine zentralisierte Bündelung und Auswertung dieser Daten erreicht werden. Zum Sammeln und Übertragen dieser Daten sind aus dem Stand der Technik, so etwa aus der DE 101 20 173 A1, Telemetrievorrichtungen bekannt, welche der Zustandsakquisition dienen. Unter dem Begriff "Zustandsakquisition" ist vorliegend ganz allgemein die Ermittlung und Bereitstellung von Zustandswerten zusammengefasst, die den Zustand eines Arbeitszugs oder eines Teils des Arbeitszugs beschreiben. Ein solcher Arbeitszug besteht regelmäßig aus einem Traktor mit einem eigenen Antrieb und mindestens einem von einem solchen Traktor gezogenen und von ihm oder von einem auf ihm angebrachten Kontrollgerät gesteuerten Anbaugerät.

Die bekannte Telemetrievorrichtung ist auf einem von einer Triebmaschine gezogenen Anbaugerät angebracht und empfängt Messdaten von ebenfalls auf dem Anbaugerät angebrachten Sensoren. Diese Messdaten werden dann über eine Funkverbindung an einen zentralen Telemetrieserver übermittelt.

Die obige Kombination von Triebmaschinen und Anbaugeräten wird häufig dynamisch vorgenommen oder geändert, kann also bei jedem Einsatz und auch während eines Einsatzes wechseln. Als nachteilig erweist sich bei der bekannten Telemetrievorrichtung, dass jedes Anbaugerät seine eigenen Messdaten unabhängig von den Messdaten der weiteren, in demselben Arbeitszug vorgesehenen Landwirtschaftsmaschinen an den zentralen Telemetrieserver übermittelt.

In einer obigen Situation sind solche Erkenntnisse, die sich nur aus einer insbesondere zeitgleichen Zusammenschau der Messdaten mehrerer Maschinen eines Arbeitszugs gewinnen lassen, schwer zu gewinnen. Hierzu müssen die von verschiedenen Maschinen erhaltenen Messdaten auf Basis von mehr oder weniger plausiblen und damit unsicherheitsbehafteten Vermutungen einander zugeordnet werden. Beispielsweise gestaltet sich schon eine nachträgliche zeitliche Synchronisation der von verschiedenen Maschinen erhaltenen Messdaten als schwierig. Ein auf solchen Vermutungen gestütztes Auswertungsverfahren kann aber nur zu begrenzt brauchbaren Ergebnissen führen.

Das Problem der Erfindung besteht darin, die aus dem Stand der Technik bekannte Vorrichtung so weiterzuentwickeln, dass die akquirierten und an einen Telemetrieserver übermittelten Zustandswerte besser ausgewertet werden können.

Das obige Problem wird bezogen auf einen Landwirtschaftlichen Arbeitszug gemäß dem Oberbegriff von Anspruch 1 durch die Merkmale des kennzeichnenden Teils von Anspruch 1 gelöst.

Bezogen auf ein Verfahren zur Zustandsakquisition gemäß dem Oberbegriff von Anspruch 12 wird das obige Problem durch die Merkmale des kennzeichnenden Teils von Anspruch 12 gelöst.

Wesentlich ist, die von den landwirtschaftlichen Maschinen eines Arbeitszugs, inklusive der Triebmaschine, jeweils unabhängig ermittelten Zustandswerte vor Übertragung an den Telemetrieserver zu gruppieren, um dann aus den gruppierten Daten einen Teledatensatz zur Übertragung an den Telemetrieserver zu erzeugen.

Die Gruppierung von Zustandswerten unterschiedlichen Ursprungs geht auf die Überlegung zurück, dass die Zustandswerte unterschiedlichen Ursprungs in ihrer Zusammenschau regelmäßig einen erweiterten Rückschluss auf den Gesamtzustand des Arbeitszugs erlauben, der basierend auf den auf eine einzige Komponente bezogenen Zustandswerten nicht möglich wäre. So kann sich ein bestimmtes Ereignis, beispielsweise ein Verstopfen eines Pflugs, in den Zustandswerten sowohl der Triebmaschine als auch in den Zustandswerten des Anbaugeräts, hier des Pflugs, widerspiegeln. Mit der Gruppierung der Daten der Triebmaschine mit denen der Anbaugeräte und der Überführung der gruppierten Daten in einen dann zu übermittelnden Teledatensatz erhöht sich der Informationsgehalt der akquirierten Zustandswerte ohne die Notwendigkeit weiterer physikalischer Messungen.

Die bevorzugte Ausgestaltung gemäß Anspruch 2 sieht vor, die empfangenen Zustandswerte ganz allgemein im Hinblick auf ihren zeitlichen Zusammenhang zueinander, insbesondere im Hinblick auf die Gleichzeitigkeit ihres Auftretens oder auf eine zeitliche Nähe, zu gruppieren.

Gemäß Anspruch 3 basiert jeder Teledatensatz zumindest annäherungsweise auf einer Momentaufnahme aller Zustandswerte.

Die bevorzugte Ausführungsform gemäß Anspruch 5 stellt eine regelmäßige Aktualisierung der an den Telemetrieserver übermittelten Daten vor.

Unterschiedliche Maschinen können ganz unterschiedliche Werkzeuge, Sensoren und weitere Ausstattungsmerkmale aufweisen und haben damit auch die Möglichkeit, ganz unterschiedliche Daten zur Verfügung stellen. Diese Ausstattungsmerkmale können sich mit der Zeit über zusätzliche Anbauten oder Aufrüstungen auch verändern. Um eine langfristige Flexibilität in dem Zusammenwirken der verschiedenen Arbeitsmaschinen zu ermöglichen, schlägt die bevorzugte Ausführungsform des Anspruchs 6 vor, dynamisch Definitionsdateien zu verwenden, welche die Datenschnittstelle zu einem Anbaugerät und insbesondere die von dem Anbaugerät zur Verfügung gestellten Messdaten spezifizieren, charakterisieren und auch sonst umfassend beschreiben. Auf diese Weise kann flexibel darauf reagiert werden, wenn ein Anbaugerät etwa ein zusätzliches Messinstrument erhält.

Regelmäßig sind die verwendeten landwirtschaftlichen Maschinen Serienprodukte. Anspruch 7 bietet die Möglichkeit, über die Verwendung einer eindeutigen Fahrzeugkennung auch seitens des Telemetrieservers jede einzelne Maschine über ihre ganze Lebensdauer zu überwachen und von gleichen Produkten derselben Serie zu unterscheiden.

Für eine lückenlose Überwachung auf Seiten des Telemetrieservers ist es wichtig, dass für relevante gemessene Ereignisse auch weitere, diesem Ereignis zugeordnete Messdaten vorliegen. Die bevorzugte Ausführungsform des Unteranspruchs 8 sieht einen Mechanismus vor, die Übertragung eines vollständigen Teledatensatzes bei solchen Ereignissen zu gewährleisten.

Die bevorzugten Ausführungsformen der Unteransprüche 9 und 10 weisen besondere Vorteile hinsichtlich der nachträglichen Ausstattung einer Triebmaschine mit einer erfindungsgemäßen Telemetrievorrichtung auf.

Im Folgenden wird die Erfindung anhand einer lediglich ein Ausführungsbeispiel darstellenden Zeichnung näher erläutert. In der Zeichnung zeigt
- Fig. 1: eine schematische Darstellung eines erfindungsgemäßen Arbeitszugs mit einer Triebmaschine, auf welcher eine erfindungsgemäße Telemetrievorrichtung angeordnet ist, sowie mit zwei Anbaugeräten,
- Fig. 2: ein Blockdiagramm einer vorschlagsgemäßen Telemetrievorrichtung,
- Fig. 3: ein Blockdiagramm der Kommunikation zwischen einer erfindungsgemäßen Telemetrievorrichtung und zwei Anbaugeräten.

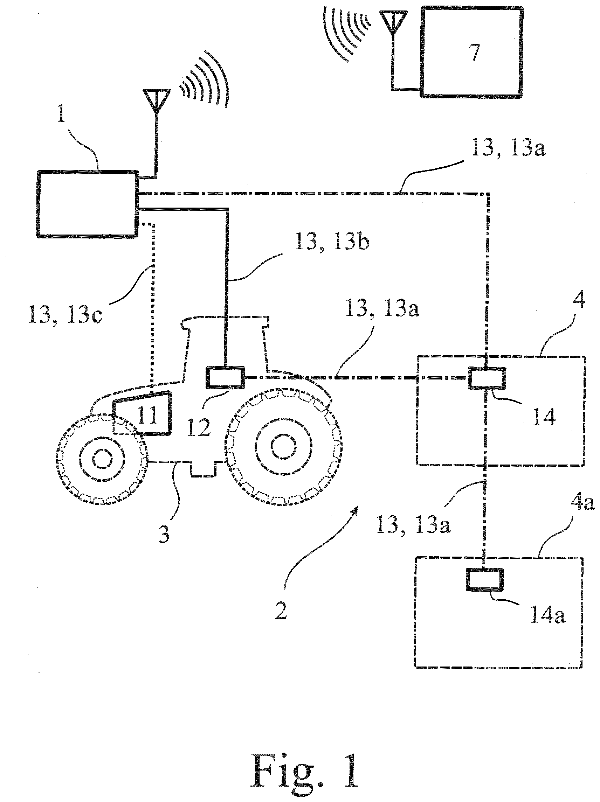

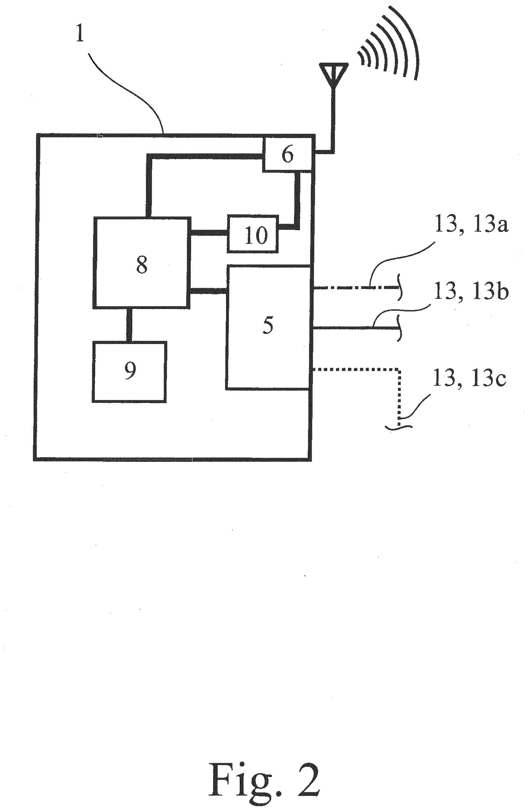

Die in den Fig. 1 und 2 dargestellte Telemetrievorrichtung 1 dient dazu, die Zustandswerte eines landwirtschaftlichen Arbeitszugs 2, wie er in der Fig. 1 dargestellt ist, zu akquirieren. Unter Zustandswerten in diesem Sinne werden beliebige gemessene oder berechnete Ist- oder Sollwerte verstanden, insbesondere gemessene physikalische Größen, geografische Positionen, Schaltzustände, laufende Zähler usw., aber auch nicht-physikalische Daten wie Namen, Seriennummern und Versionsnummern. Der Begriff Zustandswert meint den Wert selbst, etwa als Zahl, und nicht die Größe oder das Attribut, welches die Bedeutung des Zustandswertes angibt.

Der Arbeitszug der Fig. 1 umfasst eine Triebmaschine 3 mit einem eigenen Antrieb sowie ein Anbaugerät 4 und ein weiteres Anbaugerät, welches als Zweitgerät 4a bezeichnet wird. Sowohl das Anbaugerät 4 als auch das Zweitgerät 4a werden von der Triebmaschine 3 gezogen. Über das Zweitgerät 4a hinaus können weitere Anbaugeräte vorgesehen sein.

Vorschlagsgemäß weist die Telemetrievorrichtung 1 eine Übertragungseinheit 5 zum Empfang von Zustandswerten von dem Arbeitszug 2 auf. Die Zustandswerte werden regelmäßig mittels eines Kommunikationsprotokolls empfangen.

Ferner weist die Telemetrievorrichtung 1 eine Teleeinheit 6 zum Senden von Teledatensätzen an einen Telemetrieserver 7 auf, welcher Telemetrieserver 7 regelmäßig an einem zentralen Ort betrieben wird. Dieses Senden geschieht vorzugsweise drahtlos. Grundsätzlich kann sich der Telemetrieserver 7 aber auch auf der Triebmaschine 3 befinden.

Die Telemetrievorrichtung 1 weist weiter eine Verarbeitungseinheit 8 zum Erzeugen der Teledatensätze aus den empfangenen Zustandswerten auf. Bei dieser Verarbeitungseinheit 8 kann es sich um eine beliebige Rechenvorrichtung zur digitalen Datenverarbeitung handeln. Insbesondere können auf der Verarbeitungseinheit 8 Softwareprogramme einschließlich eines Betriebssystems ablaufen. Das Erzeugen der Teledatensätze muss nicht ausschließlich aus den empfangenen Zustandswerten erfolgen, vielmehr können auch weitere Daten, Variablen oder Vorschriften in diesen Vorgang einfließen.

Vorschlagsgemäß umfassen die empfangenen Zustandswerte sowohl Triebzustandswerte als auch Gerätezustandswerte. Triebzustandswerte sind hierbei von der Triebmaschine 3 gesendete Zustandswerte, welche von oder an der Triebmaschine 3 gemessen oder bestimmt wurden und dieser zugeordnet sind. Dementsprechend sind Gerätezustandswerte von einem Anbaugerät, speziell also dem Anbaugerät 4 gesendete und an dem Anbaugerät 4 gemessene oder bestimmte Zustandswerte. Daneben sind auch weitere Arten von Zustandswerten möglich.

Die Übertragungseinheit 5 kann die Zustandswerte sowohl von der Triebmaschine 3 als auch von dem Anbaugerät 4 bzw. dem Zweitgerät 4a empfangen. Dabei können die Zustandswerte auch je nach Ursprung - Triebmaschine 3, Anbaugerät 4 oder Zweitgerät 4a - über einen unterschiedlichen physikalischen Kanal an die Übertragungseinheit 5 gelangen.

Weiter ist die Verarbeitungseinheit 8 dazu eingerichtet, die empfangenen Triebzustandswerte mit den empfangenen Gerätezustandswerten basierend auf einer Gruppierungsvorschrift zu gruppieren. Eine solche Gruppierung bedeutet die Definition einer Gruppe, der logisch diese Triebzustandswerte und Gerätezustandswerte - und diese damit auch untereinander - zugeordnet werden. Die Implementierung dieser Gruppierung kann dabei beliebig erfolgen. Es können hierbei sowohl weitere Arten von Zustandswerten mit in diese Gruppe gruppiert werden als auch jeweils mehr als ein Triebzustandswert und ein Gerätezustandswert gruppiert werden. Erforderlich ist lediglich, dass jeweils mindestens ein Triebzustandswert und ein Gerätezustandswert zu der Gruppe gehört.

Ferner ist die Verarbeitungseinheit 11 vorschlagsgemäß dazu eingerichtet, aus den gruppierten Zustandswerten gemäß einer Erzeugungsvorschrift einen Teledatensatz zu generieren. Da wie festgestellt die gruppierten Zustandswerte mindestens einen empfangenen Triebzustandswert und mindestens einen Gerätezustandswert umfassen, wird folglich auch aus diesem mindestens einen Triebzustandswert und mindestens einen Gerätezustandswert der Teledatensatz generiert. Die Erzeugungsvorschrift kann dabei beliebige rechnerische oder sonstige Bearbeitungen umfassen und ist bevorzugt vordefiniert. Falls die Gruppe weitere Zustandswerte umfassen sollte, so können diese ebenfalls gemäß der Erzeugungsvorschrift als Grundlage für die Generierung des Teledatensatzes dienen.

Bevorzugt ist es besonders, dass jedem Gerätezustandswert, insbesondere jedem Zustandswert, jeweils eine Zustandsgröße zugeordnet ist. Während ein Zustandswert (oder ein Gerätezustandswert) einen Zahlenwert etwa einer gemessenen Größe oder den Wert einer Seriennummer darstellt, bedeutet Zustandsgröße hier die physikalische Größe oder die logische Bedeutung des Gerätezustandswertes bzw. Zustandswertes, dem diese Zustandsgröße zugeordnet ist. Mit anderen Worten sind die Gerätezustandswerte bzw. Zustandswerte die reinen Zahlen und die Zustandsgrößen geben die Bedeutung der Gerätezustandswerte bzw. Zustandswerte an, denen sie zugewiesen sind. Dabei ist es so, dass mehreren Gerätezustandswerten, insbesondere mehreren Zustandswerten, dieselbe Zustandsgröße zugewiesen sein kann, so etwa im Falle mehrerer physikalischer Messungen an ein und demselben Messgerät zu unterschiedlichen Zeiten. Alternativ oder zusätzlich kann auch jedem Triebzustandswert eine Zustandsgröße zugeordnet sein.

Gemäß dieser Ausführungsform weist die Telemetrievorrichtung 1 eine Speichereinheit 9 zum Ablegen des zuletzt empfangenen Gerätezustandswertes, vorzugsweise des zuletzt empfangenen Zustandswerts, jeder Zustandsgröße auf. Ferner sieht bei dieser Ausführungsform die Gruppierungsvorschrift vor, die Menge der zuletzt empfangenen Gerätezustandswerte, vorzugsweise die Menge der zuletzt empfangenen Zustandswerte, für jede Zustandsgröße miteinander zu gruppieren. Folglich wird bei der Erzeugung des Teledatensatzes eine Gruppe aus den jüngsten Gerätezustandswerten, vorzugsweise aus den jüngsten Zustandswerten, für jede Zustandsgröße gebildet. Auf diese Weise werden automatisch zeitlich gleichzeitig oder jedenfalls in kurzem Abstand empfangene Gerätezustandswerte, vorzugsweise Zustandswerte, miteinander gruppiert werden. Indem auf den Empfang in der Telemetrievorrichtung abgestellt wird, werden Synchronisierungsunterschiede interner Uhren der Triebmaschine 3 und der Anbaugeräte 4 unschädlich gemacht. Die Speichereinheit kann alternativ oder zusätzlich auch zum sinngemäßen Ablegen der Triebzustandswerte eingerichtet sein.

Eine lückenlose Reproduktion der auf der Triebmaschine 3 vorhandenen Informationen auf dem Telemetrieserver 7 wird dadurch erreicht, dass alle von der Telemetrievorrichtung 1 empfangenen, für relevant erachteten Informationen in ihrer Rohform an den Telemetrieserver 7 gesendet werden. Das ist insbesondere dadurch möglich, dass die Erzeugungsvorschrift die Aufnahme der gruppierten Zustandswerte in den Teledatensatz umfasst. Es werden also die gruppierten Zustandswerte mindestens teilweise und vorzugsweise vollständig in den Teledatensatz eingefügt.

Vorzugsweise umfassen die Zustandswerte die an einer Arbeitsvorrichtung gemessenen und/oder auf einer Bearbeitungsfläche gemessenen Messwerte. Eine Arbeitsvorrichtung in diesem Sinne kann eine beliebige Vorrichtung an der Triebmaschine 3 oder dem Anbaugerät 4 sein, so etwa ein Servomotor. Ein Messwert ist dann beispielsweise ein gemessenes Drehmoment, ein gemessener Strom oder eine gemessene Drehfrequenz. Eine Bearbeitungsfläche ist die Geländefläche, einschließlich darauf befindlicher Objekte oder Vegetation, auf der sich die Triebmaschine 3, das Anbaugerät 4 oder das Zweitgerät 4a bewegt. Hier könnte ein Messwert ein gemessener Chlorophyllgehalt oder ein gemessenes Bodenniveau sein.

Zur periodischen Aktualisierung der Daten auf dem Telemetrieserver 7 ist bevorzugt vorgesehen, dass die Verarbeitungseinheit 8 dazu eingerichtet ist, mit einer vorgegebenen Mindestfrequenz die Erzeugung eines Teledatensatzes und seine Speicherung in einem Telespeicher 10 auszulösen. Die Speicherung in einem Telespeicher 10 stellt hierbei eine Vorstufe zur Übertragung an den Telemetrieserver 7 dar.

Die Flexibilität bei der Zusammenstellung eines Arbeitszugs wird insbesondere dadurch erhöht, dass bei der Telemetrievorrichtung keine Vorkenntnisse über Art, Anzahl und Ausstattung insbesondere des Anbaugeräts 4 vorhanden sein müssen. Das kann dadurch erreicht werden, dass die entsprechenden Informationen erst beim Aufstart der Telemetrievorrichtung 1 an diese von dem Anbaugerät 4 gesendet werden. Bevorzugt ist daher, dass die Verarbeitungseinheit 8 dazu eingerichtet ist, eine Gerätedefinition zu empfangen und zwar vorzugsweise nach einem Startablauf und vor Empfang eines Zustandswertes. Bevorzugt ist ebenso, dass die Teleeinheit 6 dazu eingerichtet ist, diese Gerätedefinition an den Telemetrieserver 7 zu übersenden. Auf diese Weise kann sich auch der Telemetrieserver 7 dynamisch auf eine Rekonfiguration einstellen.

Bei der Gerätedefinition kann es sich beispielsweise um eine gemäß der Extensible Markup Language (XML) formatierte Datenfolge handeln, welche die Kommunikationsparameter der Triebmaschine 3 oder des jeweiligen Anbaugeräts 4 umfassend beschreibt und insbesondere die übermittelten Zustandswerte hinsichtlich ihrer internen Aufteilung, Länge, Bedeutung, Bezug zu physikalischen Einheiten usw. ausführlich und gemäß einem festgelegten Schema charakterisiert.

Folglich ist es bevorzugt, dass die Gerätedefinition jedem Gerätezustandswert seine jeweilige Zustandsgröße zuordnet. Insbesondere kann diese Information auch in der gemäß XML formatierten Datenfolge codiert sein. Darüber hinaus kann die Gerätedefinition angeben, welche der empfangenen Daten als Zustandswerte und speziell als Gerätezustandswerte bei der Erzeugung des Teledatensatzes in Betracht kommen. Im Kontext des ISO Bus gemäß ISO 11783 wird eine solche Gerätedefinition auch als Gerätebeschreibungsobjekt (Device Description Object) oder als Maschinenbeschreibungsdatei bezeichnet. Gemäß ISO 11783 ist in diesem Gerätebeschreibungsobjekt über das Feld DeviceProcessDataProperty jedes Objektes DeviceProcessData - welches Objekt einem Zustandswert entspricht - definiert, ob der entsprechende Zustandswert zu den grundeingestellten Messwerten gehört und also von dem Anbaugerät 4 selbständig protokolliert wird. Diejenigen Zustandswerte, für dies das der Fall ist, können dann als die zu verarbeitenden Zustandswerte im Sinne der Erfindung angesehen werden.

Für eine lückenlose Überwachung eines Anbaugeräts 4 über einen langen Zeitraum ist es wichtig, seitens des Telemetrieservers 7 empfangene Teledatensätze oder deren entsprechende Teile eindeutig einem bestimmten Anbaugerät 4 zuordnen zu können, auch wenn dieses etwa dynamisch während eines Einsatzes durch ein potentiell baugleiches anderes Anbaugerät ersetzt wird. Zu diesem Zweck ist es von Vorteil, dass die Gerätedefinition eine eindeutige Fahrzeugkennung umfasst. Hierbei kann es sich um eine Seriennummer wie der aus dem PKW-Bereich bekannten Fahrzeug-Identifizierungsnummer handeln, welche auch eindeutig einen Hersteller zu der Fahrzeugkennung zuordnet. Bevorzugt ist es, dass diese dann auch von dem generierten Teledatensatz umfasst ist.

Um eine Momentaufnahme aller Zustandswerte im Augenblick der Änderung eines bestimmten Zustandes bieten zu können, kann es vorteilhaft sein, dass die Gerätedefinition eine Zustandsgröße als Auslösegröße kennzeichnet, wobei die Verarbeitungseinheit 8 dazu eingerichtet ist, bei Empfang eines Zustandswertes, deren zugeordnete Zustandsgröße als Auslösegröße gekennzeichnet ist, die Erzeugung eines Teledatensatzes und seine Speicherung in dem Telespeicher 10 auszulösen. Der Teledatensatz wird also erzeugt - und dann versendet - sobald ein Zustandswert sich ändert, welcher als Auslösegröße definiert wurde.

Die Kennzeichnung einer Zustandsgröße als Auslösegröße kann dadurch geschehen, dass die Gerätedefinition beschreibt, dass die entsprechenden Zustandswerte im Falle einer Zustandswertänderung auf der Seite des Anbaugeräts 4 abgesendet werden. Bei einer Maschinenbeschreibungsdatei gemäß ISO 11783 entspricht der Bestimmung einer Zustandsgröße als Auslösegröße die Zuordnung des Wertes "on change" (bedeutend "bei einer Änderung") im Feld DataLogMethod des entsprechenden Objektes DataLogTrigger.

Vorteilhafterweise kann weiterführend eine Mindestabstandszeit definiert werden, so auch durch die Gerätedefinition, innerhalb derer auch bei einer neuerlichen Änderung des betreffenden Zustandswertes, deren Zustandsgröße als Auslösegröße gekennzeichnet ist, das Auslösen einer neuerlichen Erzeugung eines Teledatensatzes blockiert wird.

Die erfindungsgemäße Lösung kann bevorzugt auch für den Fall mehrerer Anbaugeräte in dem Arbeitszug 2 angewandt werden, wie insbesondere auch in der Fig. 1 dargestellt ist. Hierbei ist vorgesehen, dass der Arbeitszug 2 das Zweitgerät 4a als weiteres Anbaugerät umfasst, wobei die von der Übertragungseinheit 5 empfangenen Zustandswerte auch Zweitgerätzustandswerte umfassen und die Verarbeitungseinheit 8 dazu eingerichtet ist, gemäß der Gruppierungsvorschrift auch einen empfangenen Zweitgerätzustandswert mit zu gruppieren. Zweitgerätzustandswerte sind dementsprechend von dem Zweitgerät 4a gesendete und an dem Zweitgerät 4a gemessene oder bestimmte Werte oder solche, die dem Zweitgerät 4a zugeordnet sind. Indem also mindestens ein Zweitgerätzustandswert mit gruppiert wird, wird auch aus dem Zweitgerätzustandswert ein Teledatensatz generiert.

Wenn die Telemetrievorrichtung 1 auf eine Triebmaschine 3 nachgerüstet werden soll, dann wird diese Triebmaschine 3 - wie in der Fig. 1 dargestellt - neben ihrer Antriebsvorrichtung 11 auch regelmäßig bereits eine Triebelektronik 12 aufweisen, welche sowohl die Triebmaschine 3 selbst als auch das Anbaugerät 4 und ein vorliegend vorhandenes Zweitgerät 4a steuert und mit diesen kommuniziert. In diesem Fall ist es bevorzugt, dass die Übertragungseinheit 5 dazu eingerichtet ist, von einer Mehrzahl von physikalischen Kanälen 13 Zustandswerte zu empfangen. Vorteilhaft ist es insbesondere, wenn die Übertragungseinheit 5 dazu eingerichtet ist, Triebzustandswerte von einer Mehrzahl von physikalischen Kanälen 13 zu empfangen.

Hierauf aufbauend ist es weiter bevorzugt, dass die Mehrzahl von physikalischen Kanälen 13 einen ISO Bus 13a umfasst. Der ISO Bus 13a entspricht der Norm ISO 11783 und ist vorliegend an die Triebelektronik 12 der Triebmaschine 3, an eine Geräteelektronik 14 des Anbaugeräts 4 und an eine Zweitgeräteelektronik 14a des Zweitgeräts 4a angeschlossen

Vorzugsweise weist die Telemetrievorrichtung 1 zusätzlich einen mit der Triebelektronik 12 verbundenen Steuergerätebus 13b und einen mit der Antriebsvorrichtung 11 verbundenen Motorbus 13c auf. Vorliegend verwendet der Steuergerätebus 13b ein herstellerspezifisches Protokoll auf CAN (Controller Area Network)-Basis und der Motorbus 13c das Protokoll J1939. Auf diese Weise kann die Telemetrievorrichtung 1 einerseits die bereits definierte und implementierte Schnittstelle zur Geräteelektronik 14 gemäß ISO 11783 verwenden aber gleichzeitig auch unmittelbar auf die von der Triebmaschine 3 abgreifbaren Zustandswerte zugreifen. Damit ist die Telemetrievorrichtung 1 in der Lage, Triebzustandswerte sowohl über den ISO Bus 13a, als auch über den Steuergerätebus 13b und den Motorbus 13c zu empfangen.

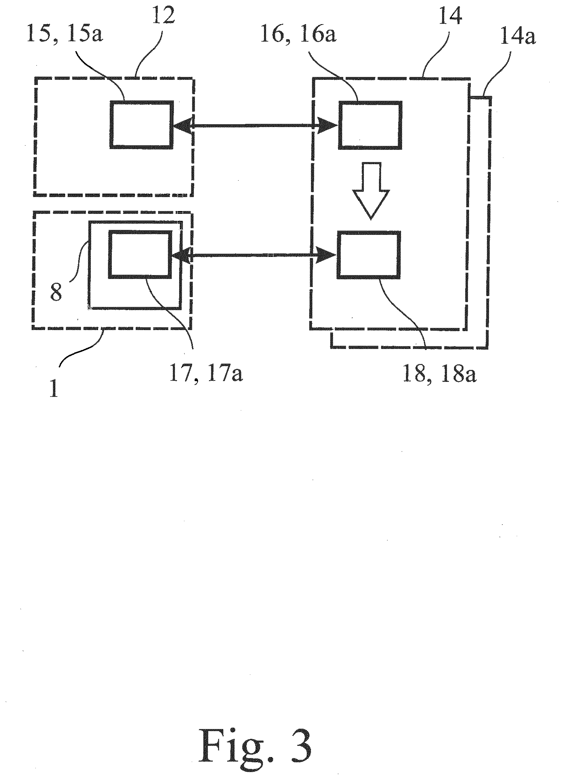

Die Fig. 3 zeigt eine bevorzugte Ausgestaltung der Kommunikation zwischen der Verarbeitungseinheit 8 und der Triebelektronik 12 einerseits, welche auf der Triebmaschine 3 angeordnet sind, und der auf dem Anbaugerät 4 angeordneten Geräteelektronik 14 andererseits gemäß der in der Fig. 1 gezeigten Situation. Die Geräteelektronik 14 stellt die zentrale Steuer- und Kontrolleinheit für das Anbaugerät 4 dar.

Zur Kontrolle des Anbaugeräts 4 mittels der Geräteelektronik 14 läuft auf der Triebelektronik 12 ein Steuerungsthread 15 ab, welcher einen Taskcontroller 15a im Sinne des Teils 10 der Norm ISO 11783 implementiert. Er ist dazu eingerichtet, eine entsprechende Gerätekontrollstruktur 16, welcher eine virtuelle Schnittstelle auf der Ebene der Software bildet und ein Working-set 16a im Sinne des Teils 10 der Norm ISO 11783 - auch als Taskcontrolclient bezeichnet - verwirklicht, auf der Geräteelektronik 14 gemäß der Norm ISO 11783 anzusprechen und auf diesem Wege das Anbaugerät 4 zu steuern. Dieses Ansprechen erfolgt über einen Datenaustausch und kann sich im Allgemeinen sowohl einer verbindungsorientierten als auch einer paketorientierten Datenübertragung bedienen.

Auf der Telemetrievorrichtung 1 und hier speziell auf der Verarbeitungseinheit 8 läuft ein Protokollierthread 17, welcher mit einer entsprechenden Protokollierstruktur 18, die ebenfalls eine virtuelle Schnittstelle auf der Ebene der Software bildet, auf der Geräteelektronik 14 ebenfalls gemäß der Norm ISO 11783 kommuniziert. Auch diese Kommunikation kann gleichermaßen entweder paket- oder verbindungsorientiert sein. Der Protokollierthread 17 verwirklicht dabei keinen Taskcontroller, sondern einen Datalogger 17a als Funktionsklassenerweiterung im Sinne der Norm ISO 11783, also eine Funktionsklasse, die zwar in der Norm ISO 11783 so nicht vorspezifiziert ist, aber im Rahmen einer gemäß der Norm erlaubten Erweiterung liegt.

Um nicht das Working-set 16a - also den sogenannten Taskcontrolclient - durch den Protokollierthread 17 ansprechen zu müssen, verwirklicht die Protokollierstruktur 18 einen der Funktionsklasse des Dataloggers 17a in analoger Weise entsprechenden Dataloggerclient 18a.

Dabei sendet die Protokollierstruktur 18 nach einem Neustart oder nach einer Initialisierung zunächst eine Gerätedefinition, im vorliegenden Fall speziell ein Gerätebeschreibungsobjekt gemäß ISO 11783, an den Protokollierthread 17 und überträgt dann regelmäßig und selbständig die Gemäß der Gerätedefinition per Grundeinstellung zu protokollierenden Zustandswerte an den Protokollierthread 17. Dabei ist die Gerätedefinition bevorzugt identisch zu der von der Gerätekontrollstruktur 16 an den Steuerungsthread 15 gemäß ISO 11783 gesendeten Gerätedefinition. Alternativ ist die Gerätedefinition abweichend von derjenigen, welche von der Gerätekontrollstruktur 16 an den Steuerungsthread 15 gesendet wird. Gerätekontrollstruktur 16 und Protokollierstruktur 18 haben dabei auch Zugriff auf dieselben Daten auf der Geräteelektronik 14.

Dementsprechend ist eine Geräteelektronik 14 für ein landwirtschaftliches Anbaugerät 4 mit einer Gerätekontrollstruktur 16, welche eine logische Schnittstelle, vorzugsweise ein Working-set 16a, für eine Ansteuerung der Geräteelektronik 14 verwirklicht, dadurch gekennzeichnet, dass die Geräteelektronik 14 zur Kommunikation mit der Übertragungseinheit 5 einer erfindungsgemäßen Telemetrievorrichtung 1 eingerichtet ist. Erfindungsgemäß weist diese Geräteelektronik 14 eine Protokollierstruktur 18 auf, welche eine separate logische Schnittstelle verwirklicht zum, vorzugsweise selbständigen, Übermitteln an die Übertragungseinheit 5 von Gerätezustandswerten des Anbaugeräts 4.

Vorteilhaft an einer solchen Aufteilung zwischen Gerätekontrollstruktur 16 und Protokollierstruktur 18 ist, dass für diese Protokollierfunktion nicht in das Zusammenspiel zwischen dem Taskcontroller 15a und dem Taskcontrolclient oder Working-set 16a eingegriffen werden muss. An ein bestehendes System, bei dem zwischen der Triebelektronik 12 und der Geräteelektronik 14 auf diese Weise kommuniziert wird, kann einfach eine Telemetrievorrichtung 1 hinzugefügt werden, welche für ihre Protokollierung die bestehende Kommunikation nicht antastet, sich aber dennoch ihrer grundlegenden Mechanismen bedient.

Eine logische Schnittstelle im Sinne der Erfindung ist eine Softwareschnittstelle oder eine virtuelle Schnittstelle. Entsprechend reicht es für das erfindungsgemäße Vorhandensein einer separaten solchen Schnittstelle aus, dass die Gerätekontrollstruktur 16 und die Protokollierstruktur 18 auf der Softwareebene separate Schnittstellen darstellen. Bei einer separaten darunterliegenden physikalischen Schicht würde sich die Verschiedenheit der logischen Schnittstellen zwangsläufig ergeben.

Daraus, dass die Triebelektronik 12 und die Telemetrievorrichtung 1 im vorliegenden Fall jeweils separate Geräte darstellen - was allerdings keine notwendige Voraussetzung darstellt -, ergibt sich zwangsläufig auch, dass der Steuerungsthread 15 und der Protokollierthread 17 jeweils separat sind.

Weiter weist ein erfindungsgemäßer landwirtschaftlicher Arbeitszug, wie er insbesondere in Fig. 1 dargestellt ist, eine Triebmaschine 3 und ein Anbaugerät 4 sowie eine Telemetrievorrichtung 1 auf. Bevorzugt ist, dass das Anbaugerät 4 eine Geräteelektronik 14 zur Kommunikation mit der Übertragungseinheit 5 aufweist. Diese ist gemäß dieser bevorzugten Ausführung dazu eingerichtet, selbständig Gerätezustandswerte an die Übertragungseinheit 5 zu senden, wobei ein solches Senden mit einer vorgegebenen Mindestfrequenz besonders bevorzugt ist.

Um die beschriebene dynamische Rekonfiguration des Arbeitszuges 2 zu ermöglichen ist es weiter bevorzugt, dass die Geräteelektronik 14 dazu eingerichtet ist, nach einem Startablauf und vor Senden eines Zustandswertes, speziell eines Gerätezustandswertes, eine Initialisierungsnachricht an die Übertragungseinheit 5 zu senden, welche Initialisierungsnachricht vorzugsweise eine Gerätedefinition umfasst.

Wie bereits im Hinblick auf die Telemetrievorrichtung 1 beschrieben und in der Fig. 1 dargestellt, kann der Arbeitszug auch ein zweites Anbaugerät, nämlich ein Zweitgerät 4a mit einer Zweitgeräteelektronik 14a umfassen. Die Zweitgeräteelektronik 14a stellt für das Zweitgerät 4a eine zentrale Steuer- und Kontrolleinheit in demselben Sinne dar wie die Geräteelektronik 14 für das Anbaugerät 4. Die Zweitgeräteelektronik 14a ist ebenso an den ISO Bus 13a angeschlossen. Analog zu der Geräteelektronik 14 bietet auch die Zeitgeräteelektronik 14a virtuelle Schnittstellen in Form einer Gerätekontrollstruktur und einer Protokollierstruktur mit der jeweils analogen Funktionalität. Diese Schnittstellen der Zweitgeräteelektronik 14a kommunizieren unabhängig von der Geräteelektronik 14 mit ihren entsprechenden Gegenstellen, nämlich dem Steuerungsthread 15 und dem Protokollierthread 17. Es sind dies also dieselben wie für die Geräteelektronik.

Dabei kann die Gerätedefinition des Zweitgeräts 4a durchaus - bis auf die eindeutige Fahrzeugkennung - identisch zu der Gerätedefinition der Anbaugeräts 4 sein, was etwa dann der Fall ist, wenn das Anbaugerät 4 und das Zweitgerät 4a baugleich sind. Alternativ wird, wenn es sich bei dem Zweitgerät 4a um ein von dem Anbaugerät 4 verschiedenes Gerät handelt, auch die jeweilige Gerätedefinition unterschiedlich sein. Ansonsten gelten die diesbezüglichen Feststellungen bezüglich der Geräteelektronik 14 sinngemäß auch für die Zweitgeräteelektronik 14a. In derselben Weise kann der Arbeitszug noch weitere Anbaugeräte aufweisen.

Das erfindungsgemäße Verfahren zur Zustandsakquisition für einen landwirtschaftlichen Arbeitszug, der eine Triebmaschine 3 und ein Anbaugerät 4 aufweist, umfasst das Empfangen von Zustandswerten, das Erzeugen von Teledatensätzen sowie das Übertragen der Teledatensätze an einen Telemetrieserver und ist dadurch gekennzeichnet, dass die empfangenen Zustandswerte sowohl Triebzustandswerte als auch Gerätezustandswerte umfassen. Das erfindungsgemäße Verfahren umfasst weiter das Gruppieren der empfangenen Triebzustandswerte mit den empfangenen Gerätezustandswerten basierend auf einer Gruppierungsvorschrift, wobei das Erzeugen des Teledatensatzes gemäß einer Erzeugungsvorschrift aus den gruppierten Zustandswerten erfolgt.

## Patentansprüche

1. Landwirtschaftlicher Arbeitszug (2) mit einer Triebmaschine (3) und einem Anbaugerät (4) sowie einer Telemetrievorrichtung (1), wobei die Telemetrievorrichtung (1) zur Zustandsakquisition für den landwirtschaftlichen Arbeitszug (2) eingerichtet ist wobei die Telemetrievorrichtung (1) umfasst:
• eine Übertragungseinheit (5) zum Empfang von Zustandswerten von dem Arbeitszug (2),
• eine Teleeinheit (6) zum, vorzugsweise drahtlosen, Senden von Teledatensätzen an einen Telemetrieserver (7),
• eine Verarbeitungseinheit (8) zum Erzeugen der Teledatensätze aus den empfangenen Zustandswerten,
**dadurch gekennzeichnet,**
**dass** das Anbaugerät (4) eine Geräteelektronik (14) zur Kommunikation mit der Übertragungseinheit (5) aufweist, welche Geräteelektronik (14) dazu eingerichtet ist, selbständig Gerätezustandswerte, insbesondere mit einer vorgegebenen Mindestfrequenz, an die Übertragungseinheit (5) zu senden, und dass die empfangenen Zustandswerte sowohl der Triebmaschine (3) zugeordnete Triebzustandswerte als auch dem Anbaugerät (4) zugeordnete Gerätezustandswerte umfassen, und dass die Verarbeitungseinheit (11) dazu eingerichtet ist, die empfangenen Triebzustandswerte mit den empfangenen Gerätezustandswerten basierend auf einer vordefinierten Gruppierungsvorschrift zu gruppieren und aus den gruppierten Zustandswerten gemäß einer Erzeugungsvorschrift einen Teledatensatz zu generieren.

2. Landwirtschaftlicher Arbeitszug (2) nach Anspruch 1,
**dadurch gekennzeichnet, dass**
die Gruppierungsvorschrift vorsieht, Zustandswerte miteinander zu gruppieren, die zueinander in einem vorbestimmten zeitlichen Zusammenhang stehen.

3. Landwirtschaftlicher Arbeitszug (2) nach Anspruch 1 oder 2,
**dadurch gekennzeichnet, dass**
jedem Gerätezustandswert, vorzugsweise jedem Zustandswert, jeweils eine Zustandsgröße zugeordnet ist, wobei die Telemetrievorrichtung (1) eine Speichereinheit (9) zum Ablegen des zuletzt empfangenen Gerätezustandswerts, vorzugsweise des zuletzt empfangenen Zustandswerts, jeder Zustandsgröße aufweist, wobei die Gruppierungsvorschrift vorsieht, die Menge der zuletzt empfangenen Gerätezustandswerte, vorzugsweise der zuletzt empfangenen Zustandswerte, für jede Zustandsgröße miteinander zu gruppieren.

4. Landwirtschaftlicher Arbeitszug (2) nach einem der Ansprüche 1 bis 3,
**dadurch gekennzeichnet, dass**
die Zustandswerte an einer Arbeitsvorrichtung gemessene und/oder auf einer Bearbeitungsfläche gemessene Messwerte umfassen.

5. Landwirtschaftlicher Arbeitszug (2) nach einem der Ansprüche 1 bis 4,
**dadurch gekennzeichnet, dass**
die Verarbeitungseinheit (8) dazu eingerichtet ist, mit einer vorgegebenen Mindestfrequenz die Erzeugung eines Teledatensatzes und seine Speicherung in einem Telespeicher (10) auszulösen.

6. Landwirtschaftlicher Arbeitszug (2) nach einem der Ansprüche 1 bis 5,
**dadurch gekennzeichnet, dass**
die Verarbeitungseinheit (11) dazu eingerichtet ist, eine Gerätedefinition, vorzugsweise nach einem Startablauf und vor Empfang eines Zustandswerts, zu empfangen, welche insbesondere jedem Gerätezustandswert seine jeweilige Zustandsgröße zuordnet.

7. Landwirtschaftlicher Arbeitszug (2) nach Anspruch 6,
**dadurch gekennzeichnet, dass**
die Gerätedefinition eine eindeutige Fahrzeugkennung umfasst, wobei die eindeutige Fahrzeugkennung eine Seriennummer wie die aus einem PKW-Bereich bekannte Fahrzeug-Identifikationsnummer ist, welche eindeutig einen Hersteller zu der Fahrzeugkennung zuordnet.

8. Landwirtschaftlicher Arbeitszug (2) nach Anspruch 6 oder 7,
**dadurch gekennzeichnet, dass**
die Gerätedefinition eine Zustandsgröße als Auslösegröße kennzeichnet, wobei die Verarbeitungseinheit (8) dazu eingerichtet ist, bei Empfang eines Zustandswertes, deren zugeordnete Zustandsgröße als Auslösegröße gekennzeichnet ist, die Erzeugung eines Teledatensatzes und seine Speicherung in dem Telespeicher (10) auszulösen.

9. Landwirtschaftlicher Arbeitszug (2) nach einem der Ansprüche 1 bis 8,
**dadurch gekennzeichnet, dass**
der Arbeitszug (2) ein Zweitgerät (11) als weiteres Anbaugerät umfasst, wobei die empfangenen Zustandswerte auch Zweitgerätzustandswerte umfassen und die Verarbeitungseinheit (8) dazu eingerichtet ist, gemäß der Gruppierungsvorschrift auch einen empfangenen Zweitgerätzustandswert mit zu gruppieren.

10. Landwirtschaftlicher Arbeitszug (2) nach einem der Ansprüche 1 bis 9,
**dadurch gekennzeichnet, dass**
die Übertragungseinheit (5) dazu eingerichtet ist, von einer Mehrzahl von physikalischen Kanälen (13) Zustandswerte zu empfangen, vorzugsweise, Triebzustandswerte von einer Mehrzahl von physikalischen Kanälen (13) zu empfangen.

11. Landwirtschaftlicher Arbeitszug (2) nach Anspruch 10,
**dadurch gekennzeichnet, dass**
die Mehrzahl von physikalischen Kanälen (13) einen ISO 5 Bus (13a) umfasst, vorzugsweise zusätzlich einen mit der Steuerelektronik (12) verbundenen Steuergerätebus (13b) und einen mit Motor und/oder Antriebstrang verbundenen Motorbus (13c) umfasst.

12. Verfahren zur Zustandsakquisition eines landwirtschaftlichen Arbeitszuges nach einem der vorherigen Ansprüche, welches umfasst:
• Empfangen von Zustandswerten,
• Erzeugen von Teledatensätzen und
• Übertragen der Teledatensätze an einen Telemetrieserver,
**dadurch gekennzeichnet, dass**
die empfangenen Zustandswerte sowohl der Triebmaschine (3) zugeordnete Triebzustandswerte als auch dem Anbaugerät (4) zugeordnete Gerätezustandswerte umfassen, wobei das Verfahren weiter umfasst:
• Gruppieren der empfangenen Triebzustandswerte mit den empfangenen Gerätewerten basierend auf einer, vordefinierten Gruppierungsvorschrift,
wobei das Erzeugen des Teledatensatzes gemäß einer Erzeugungsvorschrift aus den gruppierten Zustandswerten erfolgt.

## Claims

1. An agricultural working train (2) comprising a drive machine (3) and an attachment (4) as well as a telemetry device (1), wherein the telemetry device (1) is adapted for state acquisition for the agricultural working train (2), wherein the telemetry device (1) includes:
- a transmission unit (5) for receiving state values from the working train (2),
- a tele-unit (6) for preferably wireless transmission of teledata sets to a telemetry server (7), and
- a processing unit (8) for generating the teledata sets from the received state values,
**characterised in that**
the attachment device (4) has a device electronic means (14) for communication with the transmission unit (5), which device electronic means (14) is adapted autonomously to transmit device state values, in particular at a predetermined minimum frequency, to the transmission unit (5), and that the received state values include both drive state values associated with the drive machine (3) and also device state values associated with the attachment device (4), and that the processing unit (11) is adapted to group the received drive state values with the received device state values based on a predefined grouping instruction and to generate a teledata set from the grouped state values in accordance with a generation instruction.

2. An agricultural working train (2) according to claim 1 **characterised in that** the grouping instruction provides for grouping together state values which are in a predetermined time relationship with each other.

3. An agricultural working train (2) according to claim 1 or claim 2 **characterised in that** a respective state parameter is associated with each device state value, preferably each state value, wherein the telemetry device (1) has a memory unit (9) for storing the last-received device state value, preferably the last-received state value, of each state parameter, wherein the grouping instruction provides grouping together the assembly of the last-received device state values, preferably the last-received state values, for each state parameter.

4. An agricultural working train (2) according to one of claims 1 to 3 **characterised in that** the state values include measurement values measured at a working device and/or on a processing area.

5. An agricultural working train (2) according to one of claims 1 to 4 **characterised in that** the processing unit (8) is adapted to trigger generation of a teledata set and storage thereof in a tele-memory (10) at a predetermined minimum frequency.

6. An agricultural working train (2) according to one of claims 1 to 5 **characterised in that** the processing unit (11) is adapted to receive a device definition, preferably after a start-up process and prior to reception of a state value, which in particular associates with each device state value its respective state parameter.

7. An agricultural working train (2) according to claim 6 **characterised in that** the device definition includes a unique vehicle identification, wherein the unique vehicle indentation is a serial number like the vehicle identification number which is known from an automobile sector and which uniquely associates a manufacturer with the vehicle identification.

8. An agricultural working train (2) according to claim 6 or claim 7 **characterised in that** the device definition characterises a state parameter as a trigger parameter, wherein the processing unit (8) is adapted upon reception of a state value whose associated state parameter is characterised as a trigger parameter, to trigger generation of a teledata set and storage thereof in the tele-memory (10).

9. An agricultural working train (2) according to one of claims 1 to 8 **characterised in that** the working train (2) includes a second device (11) as a further attachment device, wherein the received state values also include second device state values and the processing unit (8) is adapted also to group a received second device state value in accordance with the grouping instruction.

10. An agricultural working train (2) according to one of claims 1 to 9 **characterised in that** the transmission unit (5) is adapted to receive state valuesfrom a plurality of physical channels (13), preferably to receive drive state values from a plurality of physical channels (13).

11. An agricultural working train (2) according to claim 10 **characterised in that** the plurality of physical channels (13) includes an ISO 5 bus (13a), preferably additionally a control device bus (13b) connected to the electronic control means (12) and an engine bus (13c) connected to the engine and/or drive train.

12. A method of state acquisition of an agricultural working train according to one of the preceding claims, which includes:
- receiving state values,
- generating teledata sets, and
- transmitting the teledata sets to a telemetry server,
**characterised in that**
the received state values include both drive state values associated with the drive machine (3) and also device state values associated with the attachment device(4), wherein the method further includes:
- grouping the received drive state values with the received device values based on a predefined grouping instruction,
wherein generation of the teledata set is effected in accordance with a generation instruction from the grouped state values.

## Revendications

1. Attelage de travail agricole (2) comprenant un engin de traction (3) et un outil porté (4) ainsi qu'un dispositif télémétrique (1), le dispositif télémétrique (1) étant agencé pour l'acquisition d'états pour l'attelage de travail agricole (2), le dispositif télémétrique (1) comprenant :
• une unité de transmission (5) pour recevoir des valeurs d'état de l'attelage de travail (2),
• une télé-unité (6) pour envoyer, de préférence sans fil, des télé-ensembles de données à un serveur télémétrique (7),
• une unité de traitement (8) pour générer des télé-ensembles de données à partir des valeurs d'état reçues,
**caractérisé en ce que** l'outil porté (4) comporte une électronique d'outil (14) pour communiquer avec l'unité de transmission (5), laquelle électronique d'outil (14) est agencée pour envoyer de manière autonome des valeurs d'état d'outil, en particulier avec une fréquence minimale prédéfinie, à l'unité de transmission (5), et **en ce que** les valeurs d'état reçues comprennent aussi bien des valeurs d'état de traction associées à l'engin de traction (3) que des valeurs d'état d'outil associées à l'outil porté (4), et **en ce que** l'unité de traitement (11) est agencée pour grouper les valeurs d'état de traction reçues avec les valeurs d'état d'outil reçues sur la base d'une prescription de groupage prédéfinie et, à partir des valeurs d'état groupées, pour générer un télé-ensemble de données conformément à une prescription de génération.

2. Attelage de travail agricole (2) selon la revendication 1, **caractérisé en ce que** la prescription de groupage prévoit de grouper entre elles des valeurs d'état qui entretiennent les unes par rapport aux autres une relation temporelle prédéterminée.

3. Attelage de travail agricole (2) selon la revendication 1 ou 2, **caractérisé en ce qu'**à chaque valeur d'état d'outil, de préférence à chaque valeur d'état, est associée une grandeur d'état, le dispositif télémétrique (1) comportant une unité de mémoire (9) pour enregistrer la valeur d'état d'outil reçue en dernier, de préférence la valeur d'état reçue en dernier, de chaque grandeur d'état, la prescription de groupage prévoyant de grouper entre elles l'ensemble des valeurs d'état d'outil reçues en dernier, de préférence des valeurs d'état reçues en dernier, pour chaque grandeur d'état.

4. Attelage de travail agricole (2) selon une des revendications 1 à 3, **caractérisé en ce que** les valeurs d'état comprennent des valeurs de mesure mesurées au niveau d'un dispositif de travail et/ou sur une surface de traitement.

5. Attelage de travail agricole (2) selon une des revendications 1 à 4, **caractérisé en ce que** l'unité de traitement (8) est agencée pour déclencher la génération d'un télé-ensemble de données et sa mémorisation dans une télémémoire (10).

6. Attelage de travail agricole (2) selon une des revendications 1 à 5, **caractérisé en ce que** l'unité de traitement (11) est agencée pour recevoir une définition d'outil, de préférence après une séquence de démarrage et avant réception d'une valeur d'état, laquelle associe en particulier à chaque valeur d'état d'outil sa grandeur d'état correspondante.

7. Attelage de travail agricole (2) selon la revendication 6, **caractérisée en ce que** la définition d'outil comprend une caractéristique de véhicule univoque, la caractéristique de véhicule univoque étant un numéro de série comme le numéro d'identification de véhicule connu du domaine des voitures particulières, lequel associe de manière univoque un fabricant à la caractéristique de véhicule.

8. Attelage de travail agricole (2) selon la revendication 6 ou 7, **caractérisé en ce que** la définition d'outil caractérise une grandeur d'état comme grandeur de déclenchement, l'unité de traitement (8) étant agencée pour déclencher, à réception d'une valeur d'état dont la grandeur d'état associée est caractérisée comme grandeur de déclenchement, la génération d'un télé-ensemble de données et sa mémorisation dans la télémémoire (10).

9. Attelage de travail agricole (2) selon une des revendications 1 à 8, **caractérisé en ce que** l'attelage de travail (2) comprend un second outil (11) comme outil porté supplémentaire, les valeurs d'état reçues comprenant aussi des valeurs d'état de second outil, et l'unité de traitement (8) est agencée pour grouper aussi une valeur d'état de second outil reçue conformément à la prescription de groupage.

10. Attelage de travail agricole (2) selon une des revendications 1 à 9, **caractérisé en ce que** l'unité de transmission (5) est agencée pour recevoir des valeurs d'état d'une pluralité de canaux physiques (13), de préférence des valeurs d'état de traction d'une pluralité de canaux physiques (13).

11. Attelage de travail agricole (2) selon la revendication 10, **caractérisé en ce que** la pluralité de canaux physiques (13) comprend un bus ISO 5 (13a), de préférence en plus un bus d'outil de commande (13b) relié à l'électronique de commande (12) et un bus de moteur (13c) relié au moteur et/ou à la chaîne de transmission.

12. Procédé d'acquisition d'états d'un attelage de travail agricole selon une des revendications précédentes, lequel comprend :
• la réception de valeurs d'état,
• la génération de télé-ensembles de données et
• la transmission de télé-ensembles de données à un serveur télémétrique,
**caractérisé en ce que** les valeurs d'état reçues comprennent aussi bien des valeurs d'état de traction associées à l'engin de traction (3) que des valeurs d'état d'outil associées à l'outil porté (4), le procédé comprenant en outre :
• le groupage des valeurs d'état de traction reçues avec les valeurs d'outil reçues sur la base d'une prescription de groupage prédéfinie,
la génération du télé-ensemble de données s'effectuant conformément à une prescription de génération à partir des valeurs d'état groupées.
